# EUROPEAN PATENT APPLICATION

(11) **EP 3 952 599 A1**
(43) Date of publication of application: **09.02.2022**
(21) Application number: 20798740.5
(22) Date of filing: 02.03.2020
(51) Int. Cl.: H04W 76/10

(54) **METHOD FOR ESTABLISHING COMMUNICATION BEARER, DEVICE AND SYSTEM**

(30) Priority: 29.04.2019 CN 201910356988
(71) Applicant: Huawei Technologies Co., Ltd., Shenzhen, Guangdong 518129 (CN)
(72) Inventor: XU, Shengfeng, Shenzhen, Guangdong 518129 (CN); YANG, Yanmei, Shenzhen, Guangdong 518129 (CN); GE, Cuili, Shenzhen, Guangdong 518129 (CN)
(74) Representative: Goddar, Heinz J.
(86) International application number: PCT/CN2020/077436
(87) International publication number: WO 2020/220820

(57) **Abstract**

This application discloses a method for establishing a communication bearer, a device, and a system, and relates to the field of communication technologies, to establish a communication bearer between devices without using a server and reduce a communication delay between the devices. In this application, a first device sends, to a first network device, a first message including indication information of a communication bearer, and receives second bearer information that is of a second device in a pairing relationship with the first device and that is obtained by the first network device based on the indication information of the communication bearer, so that the first device can establish a direct forwarding link without the participation of a server, and a communication delay between the first device and the second device can be effectively reduced.

## Description

This application claims priority to Chinese Patent Application No. 201910356988.8, filed with the China National Intellectual Property Administration on April 29, 2019 and entitled "METHOD FOR ESTABLISHING COMMUNICATION BEARER, DEVICE, AND SYSTEM", which is incorporated herein by reference in its entirety.

### TECHNICAL FIELD

Embodiments of this application relate to the field of communication technologies, and in particular, to a method for establishing a C2 communication bearer, a device, and a system.

### BACKGROUND

An uncrewed aerial vehicle (Unmanned Aerial Vehicle, UAV) is a non-manned aircraft with autonomous power, and can perform, through manual control or autopilot, a variety of tasks including agricultural plant protection, electric power inspection, police law enforcement, geological exploration, environmental monitoring, forest fire prevention, disaster relief, and film and aerial photography. Among the UAV, an uncrewed aerial vehicle controller (UAV Controller, UAC) UAC, and UAV, the UAC commands and controls the UAV by sending collected information and control data. Therefore, a command and control (Command and Control, C2) communication bearer between the UAC and the UAV needs to be established to implement the foregoing process.

An existing method for establishing a C2 communication bearer is generally implemented by using an uncrewed aerial vehicle server (UAV server, UVS). However, for a UAV or a UAC for which the UVS is not configured or that cannot be successfully connected to the UVS, the C2 communication bearer cannot be established by using the UVS. In addition, since control data and reporting of the collected information generally have relatively strict requirements on delay and reliability (for example, the delay is required to be within 100 ms to 10 ms, and a packet error rate is required to be lower than 10⁻³), and time sensitivity of C2 communication may be reduced if the C2 communication bearer is established by using the UVS, a local direct forwarding link needs to be established, to meet a low-delay transmission requirement of the control data and to facilitate time-sensitive control of the uncrewed aerial vehicle.

### SUMMARY

Embodiments of this application provide a method for establishing a communication bearer, to establish a communication bearer between devices without using a server and reduce a communication delay between the devices.

To achieve the foregoing objective, the following technical solutions are used in the embodiments of this application.

According to a first aspect, a method for establishing a communication bearer is provided. The method is applied to a first network device, and may include: The first network device receives a first message from a first device, where the first message is used to request to establish a communication bearer, the communication bearer is used to transmit communication information between the first device and a second device, and the first message includes indication information of the communication bearer. The first network device obtains second bearer information of the second device based on the indication information of the communication bearer, where the second bearer information is used to establish the communication bearer, and the second bearer information includes address information of the second device. The first network device sends a response message to the first device.

According to the technical solution provided in the first aspect, the first network device obtains the second bearer information of the second device based on the indication information of the communication bearer in the first message, and indicates the first device to send the communication information to the second device. In this way, a direct forwarding link is established without the participation of a server, and a communication delay between the first device and the second device is effectively reduced.

In a possible implementation, the response message includes the second bearer information. The first network device indicates the first device to send, based on the second bearer information, the communication information to the second device. In this way, a direct forwarding link is established without the participation of a server, and a communication delay between the first device and the second device is effectively reduced.

In a possible implementation, after that the first network device obtains second bearer information of the second device based on the indication information of the communication bearer, the method further includes: The first network device sends the second bearer information to a second network device. The first network device indicates the second network device to forward, to the second device based on the second bearer information, the communication information to be sent from the first device to the second device. In this way, a direct forwarding link is established without the participation of a server, and a communication delay between the first device and the second device is effectively reduced.

In a possible implementation, that the first network device obtains second bearer information of the second device based on the indication information of the communication bearer includes: In response to the received indication information of the communication bearer, the first network device obtains status information of a second bearer based on second device information; and the first network device obtains the second bearer information based on the status information of the second bearer, where the second device information is included in the first message that is received by the first network device from the first device; or the first network device obtains the second device information from a third network device. After the second bearer is established, the first network device obtains the second bearer information based on the second device information and based on the indication information of the communication bearer, to indicate the first device or the second network device to establish the direct forwarding link, and to effectively reduce the communication delay between the first device and the second device.

In a possible implementation, that the first network device obtains status information of a second bearer based on second device information includes: The first network device obtains, through query based on the second device information, the status information of the second bearer, where the status information of the second bearer is stored in the first network device; or the first network device sends a second message to a fourth network device, to request to obtain the status information of the second bearer, where the second message includes the second device information; and the first network device receives the status information of the second bearer from the fourth network device. The status information of the second bearer is stored in the first network device or the fourth network device, so that the first network device can quickly and conveniently obtain the status information of the second bearer based on the indication information of the communication bearer, and establishment of the communication bearer can be accelerated.

In a possible implementation, that the first network device obtains the second bearer information based on the status information of the second bearer includes: The first network device sends a third message to the fourth network device, to request to obtain the second bearer information; and the first network device receives the second bearer information from the fourth network device; or the first network device receives storage location information of the second bearer information from the fourth network device, where the second bearer information is stored in a fifth network device; and the first network device obtains the second bearer information from the fifth network device based on the storage location information of the second bearer information. The second bearer information is stored in the fourth network device or the fifth network device, so that the first network device can quickly and conveniently obtain the second bearer information based on the indication information of the communication bearer.

In a possible implementation, if the fourth network device and the fifth network device do not store the second bearer information, the method further includes: The first network device triggers the second device to establish the second bearer. The first network device may trigger establishment of the second bearer when the second bearer is not established, so that time required for establishing the communication bearer is shortened, and the communication delay between the first device and the second device is effectively reduced.

In a possible implementation, that the first network device obtains second bearer information of the second device based on the indication information of the communication bearer includes: The first network device determines, based on the indication information of the communication bearer, that a communication bearer manner is local switching; or the first network device obtains, from a sixth network device, that the communication bearer manner is local switching; and the first network device obtains the second bearer information of the second device based on the communication bearer manner. The first network device may obtain the second bearer information when the first message indicates to establish the local switching link, so that the communication bearer can be quickly established based on the indication, and the communication delay between the first device and the second device can be effectively reduced.

In a possible implementation, before or after the first network device sends a response message to the first device, the method further includes: The first network device sends a fourth message to the fourth network device, where the fourth message includes status information of a first bearer, first device information, and first bearer information, and the fourth message is used to indicate the fourth network device to store the information in the fourth message. When a bearer status of the first device changes, the first network device may store related information in the fourth network device, so that the related information can be quickly and conveniently obtained when required, and establishment of the communication link between the first device and the second device can be accelerated.

In a possible implementation, the method may further include: The first network device sends a fifth message to the second device, where the fifth message includes the first bearer information, and the first bearer information includes address information of the first device; or the first network device sends a sixth message to the second network device, where the sixth message includes the first bearer information; and the first bearer information is used to establish the communication bearer. The first network device sends the first bearer information to the second device or the second network device, so that the first device or the second network device may send the communication information to the first device based on the first bearer information, and a delay in sending information by the second device to the first device can be effectively reduced.

In a possible implementation, the fifth network device is different from the first network device, and the method may further include: The first network device exchanges pairing forwarding information of the first bearer and the second bearer with the fifth network device. When the second device does not belong to the second network device (but belongs to the fifth network device), the first network device exchanges bearer information with the fifth network device, so that the second bearer information can be quickly and conveniently obtained.

According to a second aspect, a method for establishing a communication bearer is provided. The method is applied to a second network device, and may include: The second network device receives second bearer information from a first network device, where the second bearer information is used to indicate the second network device to establish a communication bearer between a first device and a second device; and the second network device establishes the communication bearer between the first device and the second device based on the second bearer information.

According to the technical solution provided in the second aspect, the second network device may forward, to the second device based on the second bearer information, communication information to be sent from the first device to the second device. In this way, a direct forwarding link is established without the participation of a server, and a communication delay between the first device and the second device is effectively reduced.

In a possible implementation, the method may further include: The second network device receives data packet detection indication information from the first network device, where the data packet detection indication information is used to indicate the second network device to detect a data packet transmitted on the communication bearer between the first device and the second device, and the data packet detection indication information includes a data packet detection rule; and the second network device detects the data packet according to the data packet detection rule. The second network device may detect, based on the data packet detection indication information, the data packet sent from the first device to the second device, so that the second network device may forward the data packet to the second device based on the second bearer information.

In a possible implementation, the method may further include: The second network device modifies receiver information of the detected data packet to address information of the second device based on the second bearer information. In this manner, the communication information can be quickly and conveniently sent from the first device to the second device.

According to a third aspect, a method for establishing a communication bearer is provided. The method is applied to a first device, and may include: The first device sends a first message to a first network device, where the first message includes indication information of a communication bearer, the first message is used to request to establish the communication bearer, and the communication bearer is used to transmit communication information between the first device and a second device; and the first device receives a response message from the first network device, where the indication information of the communication bearer is used to indicate that a communication bearer manner is local switching.

According to the technical solution provided in the third aspect, the first device sends, to the first network device, a message for establishing a local switching bearer, so that the first network device may establish, based on the indication information, a direct forwarding link without the participation of a server, and a communication delay between the first device and the second device can be effectively reduced.

In a possible implementation, the indication information of the communication bearer includes explicit indication information and implicit indication information; and the explicit indication information includes network slice information, data network information, and/or control link information, and the implicit indication information includes first device information and/or second device information. The first device may indicate, by using the network slice information, the data network information, the control link information, and/or the like, the first network device to establish the local switching bearer, so that the first network device can establish, based on the indication information, the direct forwarding link without the participation of a server, and the communication delay between the first device and the second device can be effectively reduced.

In a possible implementation, the response message may include second bearer information, and the second bearer information is used to establish the communication bearer between the first device and the second device; and the method may further include: The first device establishes the communication bearer between the first device and the second device based on the second bearer information. In this process, the first device can establish the direct forwarding link without the participation of a server, and the communication delay between the first device and the second device can be effectively reduced.

In a possible implementation, the method may further include: The first device encapsulates, based on the second bearer information, a data packet transmitted on the communication bearer between the first device and the second device, where receiver information of the data packet includes address information of the second device. In this process, the first device encapsulates a to-be-transmitted data packet based on the second bearer information, so that the first device can quickly and conveniently send the data packet without the participation of the server.

According to a fourth aspect, a method for establishing a communication bearer is provided. The method is applied to a fourth network device, and may include: The fourth network device receives a request message of a first network device, where the request message is used to request to obtain at least one of the following information: status information of a first bearer, status information of a second bearer, second device information, first device information, first bearer information, second bearer information, storage location information of the second bearer information, and storage location information of the first bearer information, and the information obtained by the request message is used to establish a communication bearer between a first device and a second device; and the fourth network device sends the at least one of the foregoing information to the first network device.

According to the technical solution provided in the fourth aspect, establishment of the communication bearer can be accelerated by obtaining the information from the fourth network device.

In a possible implementation, the fourth network device receives a fourth message from the first network device, where the fourth message is used to indicate the fourth network device to store the information in the fourth message, and the fourth message includes the at least one of the foregoing information; and the fourth network device stores the at least one of the foregoing information. The foregoing information is stored in the fourth network device, so that the first network device can quickly and conveniently obtain the foregoing information when the information is required, and the establishment of the communication bearer can be accelerated.

In a possible implementation, the fourth message may include the first bearer information or the second bearer information, and after the fourth network device receives a fourth message from the first network device, the method may further include: The fourth network device sends the first bearer information to a second network device or the second device; or the fourth network device sends the second bearer information to the second network device or the first device. According to the foregoing process, the first device, the second device, or the second network device may send the communication information to a receive-end device based on bearer information of the receive end, and an information sending delay can be effectively reduced.

According to a fifth aspect, a method for establishing a communication bearer is provided. The method is applied to a first system, the first system includes a first network device, a first device, and a second device, and the method may include: The first device sends a first message to the first network device, where the first message includes indication information of a communication bearer, the first message is used to request to establish the communication bearer, and the communication bearer is used to transmit communication information between the first device and the second device; the first network device obtains second bearer information of the second device based on the indication information of the communication bearer, where the second bearer information includes address information of the second device; and the first network device sends a response message to the first device, and the first device sends a data packet to the second device based on the response message.

According to the technical solution provided in the fifth aspect, the first network device obtains the second bearer information of the second device based on the indication information of the communication bearer in the first message, and indicates the first device to send the communication information to the second device. In this way, a direct forwarding link is established without the participation of a server, and a communication delay between the first device and the second device is effectively reduced.

In a possible implementation, the response message includes the second bearer information. The first network device indicates the first device to send, based on the second bearer information, the communication information to the second device. In this way, a direct forwarding link is established without the participation of a server, and a communication delay between the first device and the second device is effectively reduced.

In a possible implementation, the first system further includes a second network device, after the first network device obtains the second bearer information of the second device based on the indication information of the communication bearer, the method may further include: The first network device sends the second bearer information to the second network device. The first network device indicates the second network device to forward, to the second device based on the second bearer information, the communication information to be sent from the first device to the second device. In this way, a direct forwarding link is established without the participation of a server, and a communication delay between the first device and the second device is effectively reduced.

In a possible implementation, that the first network device obtains second bearer information of the second device based on the indication information of the communication bearer may include: In response to the received indication information of the communication bearer, the first network device obtains, through query, status information of a second bearer based on second device information, where the status information of the second bearer is stored in the first network device; and the first network device obtains the second bearer information based on the status information of the second bearer, where the second device information is included in the first message. After the second bearer is established, the first network device obtains the second bearer information based on the second device information and based on the indication information of the communication bearer, to indicate the first device or the second network device to establish a direct forwarding link, and to effectively reduce the communication delay between the first device and the second device.

In a possible implementation, the first system may further include a fourth network device, and that the first network device obtains second bearer information of the second device based on the indication information of the communication bearer includes: In response to the received indication information of the communication bearer, the first network device sends a second message to the fourth network device, where the second message is used to obtain status information of a second bearer, and the second message includes second device information; the first network device receives the status information of the second bearer from the fourth network device; and the first network device obtains the second bearer information based on the status information of the second bearer. The status information of the second bearer is stored in the first network device or the fourth network device, so that the first network device can quickly and conveniently obtain the status information of the second bearer based on the indication information of the communication bearer, and establishment of the communication bearer can be accelerated.

In a possible implementation, if the first network device does not obtain the second bearer information, the method may further include: The first network device triggers the second device to establish the second bearer. The first network device may trigger establishment of the second bearer when the second bearer is not established, so that time required for establishing the communication bearer is shortened, and the communication delay between the first device and the second device is effectively reduced.

In a possible implementation, that the first device sends a data packet to the second device based on the response message may include: The first device encapsulates, based on the second bearer information, a data packet transmitted on the communication bearer between the first device and the second device, where receiver information of the data packet includes the address information of the second device; and the first device sends the data packet to the second device. The first device sends, to the first network device, a message for establishing a local switching bearer, so that the first network device may establish, based on the indication information, a direct forwarding link without the participation of a server, and a communication delay between the first device and the second device can be effectively reduced.

In a possible implementation, that the first device sends a data packet to the second device based on the response message may include: The first device sends the data packet to the second network device; the second network device detects the data packet according to a data packet detection rule, where the data packet detection rule is obtained by the second network device from the first network device; the second network device modifies receiver information of the detected data packet to address information of the second device based on the second bearer information; and the second network device sends the modified data packet to the second device. In this process, the first device encapsulates a to-be-transmitted data packet based on the second bearer information, so that the first device can quickly and conveniently send the data packet without the participation of the server.

In a possible implementation, the first system may further include a sixth network device, and that the first network device obtains second bearer information of the second device based on the indication information of the communication bearer may include: The first network device determines, based on the indication information of the communication bearer, that a communication bearer manner is local switching; or the first network device obtains, from a sixth network device, that the communication bearer manner is local switching; and the first network device obtains the second bearer information of the second device based on the communication bearer manner. The first network device may obtain the second bearer information when the first message indicates to establish the local switching link, so that the communication bearer can be quickly established based on the indication, and the communication delay between the first device and the second device can be effectively reduced.

In a possible implementation, before or after the first network device sends the response message to the first device, the method may further include: The first network device sends a fourth message to the fourth network device, where the fourth message includes at least one of the following information: first device information, the second device information, status information of a first bearer, the status information of the second bearer, first bearer information, the second bearer information, storage location information of the first bearer information, and storage location information of the second bearer information; and the fourth message is used to indicate the fourth network device to store the at least one of the foregoing information in the fourth message. When a bearer status of the first device changes, the first network device may store related information in the fourth network device, so that the related information can be quickly and conveniently obtained when required, and establishment of the communication link between the first device and the second device can be accelerated.

In a possible implementation, the method may further include: The first network device sends a fifth message to the second device, where the fifth message includes the first bearer information, and the first bearer information includes address information of the first device; or the first network device sends a sixth message to the second network device, where the sixth message includes the first bearer information; and the first bearer information is used to establish the communication bearer. The first network device sends the first bearer information to the second device or the second network device, so that the first device or the second network device may send the communication information to the first device based on the first bearer information, and a delay in sending information by the second device to the first device can be effectively reduced.

According to a sixth aspect, a first network device is provided. The first network device may include: a receiving module, configured to receive a first message from a first device, where the first message is used to request to establish a communication bearer, the communication bearer is used to transmit communication information between the first device and a second device, and the first message includes indication information of the communication bearer; an information obtaining module, configured to obtain second bearer information of the second device based on the indication information of the communication bearer, where the second bearer information is used to establish the communication bearer, and the second bearer information includes address information of the second device; and a sending module, configured to send a response message to the first device.

According to the technical solution provided in the sixth aspect, the first network device obtains the second bearer information of the second device based on the indication information of the communication bearer in the first message, and indicates the first device to send the communication information to the second device. In this way, a direct forwarding link is established without the participation of a server, and a communication delay between the first device and the second device is effectively reduced.

In a possible implementation, the response message includes the second bearer information. The first network device indicates the first device to send, based on the second bearer information, the communication information to the second device. In this way, a direct forwarding link is established without the participation of a server, and a communication delay between the first device and the second device is effectively reduced.

In a possible implementation, after the information obtaining module obtains the second bearer information of the second device based on the indication information of the communication bearer, the information obtaining module is further configured to send the second bearer information to a second network device by using the sending module. The first network device indicates the second network device to forward, to the second device based on the second bearer information, the communication information to be sent from the first device to the second device. In this way, a direct forwarding link is established without the participation of a server, and a communication delay between the first device and the second device is effectively reduced.

In a possible implementation, that the information obtaining module obtains second bearer information of the second device based on the indication information of the communication bearer includes: In response to the indication information of the communication bearer received by the receiving module, the information obtaining module obtains status information of a second bearer based on second device information; and the information obtaining module obtains the second bearer information based on the status information of the second bearer, where the second device information is included in the first message that is received by the first network device from the first device; or the first network device obtains the second device information from a third network device. After the second bearer is established, the first network device obtains the second bearer information based on the second device information and based on the indication information of the communication bearer, to indicate the first device or the second network device to establish a direct forwarding link, and to effectively reduce the communication delay between the first device and the second device.

In a possible implementation, that the information obtaining module obtains status information of a second bearer based on second device information includes: The information obtaining module obtains, through query based on the second device information, the status information of the second bearer, where the status information of the second bearer is stored in the first network device; or the first network device sends a second message to a fourth network device, to request to obtain the status information of the second bearer, where the second message includes the second device information; and the information obtaining module receives the status information of the second bearer from the fourth network device by using the receiving module. The status information of the second bearer is stored in the first network device or the fourth network device, so that the first network device can quickly and conveniently obtain the status information of the second bearer based on the indication information of the communication bearer, and establishment of the communication bearer can be accelerated.

In a possible implementation, that the information obtaining module obtains the second bearer information based on the status information of the second bearer includes: The information obtaining module sends a third message to the fourth network device by using the sending module, to request to obtain the second bearer information; and the information obtaining module receives the second bearer information from the fourth network device by using the receiving module; or the information obtaining module receives storage location information of the second bearer information from the fourth network device, where the second bearer information is stored in a fifth network device; and the first network device obtains the second bearer information from the fifth network device based on the storage location information of the second bearer information. The second bearer information is stored in the fourth network device or the fifth network device, so that the first network device can quickly and conveniently obtain the second bearer information based on the indication information of the communication bearer.

In a possible implementation, if the fourth network device and the fifth network device do not store the second bearer information, the information obtaining module is further configured to trigger the second device to establish the second bearer. The first network device may trigger establishment of the second bearer when the second bearer is not established, so that time required for establishing the communication bearer is shortened, and the communication delay between the first device and the second device is effectively reduced.

In a possible implementation, that the information obtaining module obtains second bearer information of the second device based on the indication information of the communication bearer includes: The information obtaining module determines, based on the indication information of the communication bearer, that a communication bearer manner is local switching; or the information obtaining module obtains, from a sixth network device by using the receiving module, that the communication bearer manner is local switching; and the first network device obtains the second bearer information of the second device based on the communication bearer manner. The first network device may obtain the second bearer information when the first message indicates to establish the local switching link, so that the communication bearer can be quickly established based on the indication, and the communication delay between the first device and the second device can be effectively reduced.

In a possible implementation, before or after the sending module sends a response message to the first device, the sending module is further configured to send a fourth message to the fourth network device, where the fourth message includes status information of a first bearer, first device information, and first bearer information, and the fourth message is used to indicate the fourth network device to store the information in the fourth message. When a bearer status of the first device changes, the first network device may store related information in the fourth network device, so that the related information can be quickly and conveniently obtained when required, and establishment of the communication link between the first device and the second device can be accelerated.

In a possible implementation, the sending module is further configured to send a fifth message to the second device, where the fifth message includes the first bearer information, and the first bearer information includes address information of the first device; or the sending module sends a sixth message to the second network device, where the sixth message includes the first bearer information; and the first bearer information is used to establish the communication bearer. The first network device sends the first bearer information to the second device or the second network device, so that the first device or the second network device may send the communication information to the first device based on the first bearer information, and a delay in sending information by the second device to the first device can be effectively reduced.

In a possible implementation, the fifth network device is different from the first network device, and the sending module and the receiving module are further configured to exchange pairing forwarding information of the first bearer and the second bearer with the fifth network device. When the second device does not belong to the second network device (but belongs to the fifth network device), the first network device exchanges bearer information with the fifth network device, so that the second bearer information can be quickly and conveniently obtained.

According to a seventh aspect, a second network device is provided. The second network device may include: a receiving module, configured to receive second bearer information from a first network device, where the second bearer information is used to indicate the second network device to establish a communication bearer between a first device and a second device; and a processing module, configured to establish the communication bearer between the first device and the second device based on the second bearer information.

According to the technical solution provided in the seventh aspect, the second network device may forward, to the second device based on the second bearer information, communication information to be sent from the first device to the second device. In this way, a direct forwarding link is established without the participation of a server, and a communication delay between the first device and the second device is effectively reduced.

In a possible implementation, the receiving module is further configured to receive data packet detection indication information from the first network device, where the data packet detection indication information is used to indicate the second network device to detect a data packet transmitted on the communication bearer between the first device and the second device, and the data packet detection indication information includes a data packet detection rule; and the processing module is further configured to detect the data packet according to the data packet detection rule. The second network device may detect, based on the data packet detection indication information, the data packet sent from the first device to the second device, so that the second network device may forward the data packet to the second device based on the second bearer information.

In a possible implementation, the processing module is further configured to modify receiver information of the detected data packet to address information of the second device based on the second bearer information. In this manner, the communication information can be quickly and conveniently sent from the first device to the second device.

According to an eighth aspect, a first device is provided. The first device may include: a sending module, configured to send a first message to a first network device, where the first message includes indication information of a communication bearer, the first message is used to request to establish the communication bearer, and the communication bearer is used to transmit communication information between the first device and a second device; and a receiving module, configured to receive a response message from the first network device, where the indication information of the communication bearer is used to indicate that a communication bearer manner is local switching.

According to the technical solution provided in the eighth aspect, the first device sends, to the first network device, a message for establishing a local switching bearer, so that the first network device may establish, based on the indication information, a direct forwarding link without the participation of a server, and a communication delay between the first device and the second device can be effectively reduced.

In a possible implementation, the indication information of the communication bearer includes explicit indication information and implicit indication information; and the explicit indication information includes network slice information, data network information, and/or control link information, and the implicit indication information includes first device information and/or second device information. The first device may indicate, by using the network slice information, the data network information, the control link information, and/or the like, the first network device to establish the local switching bearer, so that the first network device can establish, based on the indication information, the direct forwarding link without the participation of a server, and the communication delay between the first device and the second device can be effectively reduced.

In a possible implementation, the response message may include second bearer information, and the second bearer information is used to establish the communication bearer between the first device and the second device; and the first device may further include: a processing module, configured to establish the communication bearer between the first device and the second device based on the second bearer information. In this process, the first device can establish the direct forwarding link without the participation of a server, and the communication delay between the first device and the second device can be effectively reduced.

In a possible implementation, the processing module is further configured to: encapsulate, based on the second bearer information, a data packet transmitted on the communication bearer between the first device and the second device, where receiver information of the data packet includes address information of the second device. In this process, the first device encapsulates a to-be-transmitted data packet based on the second bearer information, so that the first device can quickly and conveniently send the data packet without the participation of the server.

According to a ninth aspect, a fourth network device is provided. The fourth network device may include: a receiving module, configured to receive a request message of a first network device, where the request message is used to request to obtain at least one of the following information: status information of a first bearer, status information of a second bearer, second device information, first device information, first bearer information, second bearer information, storage location information of the second bearer information, and storage location information of the first bearer information, and the information obtained by the request message is used to establish a communication bearer between a first device and a second device; and the fourth network device sends the at least one of the foregoing information to the first network device.

According to the technical solution provided in the ninth aspect, establishment of the communication bearer can be accelerated by obtaining the information from the fourth network device.

In a possible implementation, the receiving module is further configured to receive a fourth message from the first network device, where the fourth message is used to indicate the fourth network device to store the information in the fourth message, and the fourth message includes the at least one of the foregoing information; and the fourth network device stores the at least one of the foregoing information. The foregoing information is stored in the fourth network device, so that the first network device can quickly and conveniently obtain the foregoing information when the information is required, and establishment of the communication bearer can be accelerated.

In a possible implementation, the fourth message may include the first bearer information or the second bearer information, and after the fourth network device receives a fourth message from the first network device, the fourth network device may further include: a sending module, configured to send the first bearer information to a second network device or the second device; or send the second bearer information to the second network device or the first device. According to the foregoing process, the first device, the second device, or the second network device may send the communication information to a receive-end device based on bearer information of the receive end, and an information sending delay can be effectively reduced.

According to a tenth aspect, a first system is provided. The first system includes: a first network device, configured to implement the method for establishing a communication bearer according to any possible implementation of the first aspect; a second network device, configured to implement the method for establishing a communication bearer according to any possible implementation of the second aspect; a first device, configured to implement the method for establishing a communication bearer with a second device according to any possible implementation of the third aspect; and a fourth network device, configured to implement the method for establishing a communication bearer according to any possible implementation of the fourth aspect.

According to an eleventh aspect, a computer-readable storage medium is provided. The computer-readable storage medium stores computer-executable instructions. When the computer-executable instructions are executed by a processor, the method for establishing a communication bearer according to any one of the possible implementations of the first aspect, the second aspect, the third aspect, the fourth aspect, or the fifth aspect is implemented.

According to a twelfth aspect, a chip system is provided. The chip system includes a processor and a memory, and the memory stores instructions. When the instructions are executed by the processor, the method for establishing a communication bearer according to any one of the possible implementations of the first aspect, the second aspect, the third aspect, the fourth aspect, or the fifth aspect is implemented. The chip system may include a chip, or may include a chip and another discrete component.

### BRIEF DESCRIPTION OF DRAWINGS

FIG. 1 is a diagram of a network service architecture according to an embodiment of this application;
FIG. 2 is a schematic diagram of a possible application scenario according to an embodiment of this application;
FIG. 3 is a schematic diagram of a hardware structure of a first device/second device according to an embodiment of this application;
FIG. 4 is a schematic diagram of a structure of a first system according to an embodiment of this application;
FIG. 5 is a flowchart 1 of a method for establishing a communication bearer according to an embodiment of this application;
FIG. 6 is a flowchart 2 of a method for establishing a communication bearer according to an embodiment of this application;
FIG. 7 is a flowchart 3 of a method for establishing a communication bearer according to an embodiment of this application;
FIG. 8 is a flowchart 4 of a method for establishing a communication bearer according to an embodiment of this application;
FIG. 9 is a schematic diagram of a structure of a UAV according to an embodiment of this application;
FIG. 10 is a schematic diagram of a structure of an SMF according to an embodiment of this application;
FIG. 11 is a schematic diagram of a structure of a UPF according to an embodiment of this application; and
FIG. 12 is a schematic diagram of a structure of a UDM according to an embodiment of this application.

### DESCRIPTION OF EMBODIMENTS

Embodiments of this application provide a method for establishing a communication bearer. The method may be applied to a process of establishing a C2 communication bearer between a first device and a second device. The C2 communication bearer can be established without participation of a server, so that a communication delay caused due to participation of the server can be reduced. In addition, a problem that the first device and/or the second device cannot successfully establish the C2 communication bearer when no server is configured can be resolved.

The method in the embodiments of this application may be applied to a 3rd generation (3rd Generation, 3G) mobile communication network, a 4th generation (4th Generation, 4G) mobile communication network long term evolution (Long Term Evolution, LTE) network, and a 5th generation (5th Generation, 5G) mobile communication system new radio (New Radio, NR) network. The foregoing method may be further applied to a next-generation cellular mobile communication system and another subsequent mobile communication system. This is not limited in this application.

A first network device in the method in the embodiments of this application may be a control plane network device, for example, a session management function (Session Management Function, SMF) network element, or another network device with a communication bearer establishment function. This is not limited in the embodiments of this application.

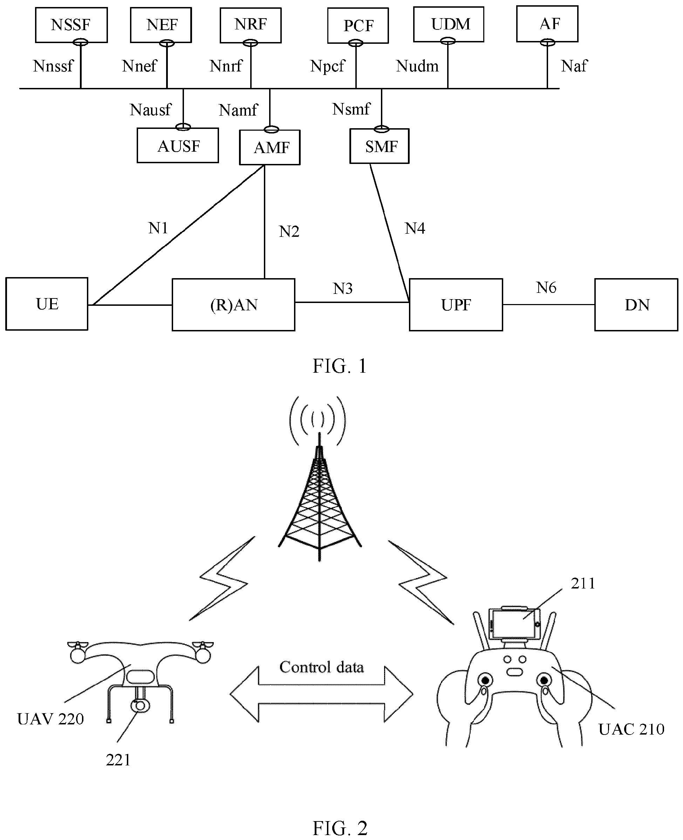

FIG. 1 is a diagram of a network service architecture according to an embodiment of this application. FIG. 1 shows an interaction relationship between a network function and an entity and a corresponding interface by using a network service architecture of a 5G system as an example. Network functions and entities included in a 3GPP service-based network architecture (service-based architecture, SBA) of the 5G system mainly include: user equipment (User Equipment, UE), an access network (Access Network, AN) or a radio access network (Radio Access Network, RAN), a user plane function (User Plane Function, UPF), a data network (Data Network, DN), an access management function (Access Management Function, AMF), a session management function (SMF), an authentication service function (Authentication Server Function, AUSF), a policy control function (Policy Control Function, PCF), an application function (Application Function, AF), a network slice selection function (Network Slice Selection Function, NSSF), unified data management (Unified Data Management, UDM), a network exposure function (Network Exposure Function, NEF), and a network repository function (NF Repository Function, NRF).

The UE, the (R)AN, the UPF, and the DN are generally referred to as data plane network functions and entities, and the other parts are generally referred to as control plane network functions and entities. The control plane network functions and entities have a 3GPP-defined processing function in a network, and have 3GPP-defined function behavior and interfaces. A network function and entity can be implemented as a network element running on dedicated hardware, a software instance running on dedicated hardware, or a virtual function instantiated on a proper platform, for example, on a cloud infrastructure device.

The following describes the main functions of each function and entity in detail.
(R)AN: The (R)AN may include base stations in various forms, for example, a macro base station, a micro base station, and a distributed unit-control unit (distribute unit-control unit, DU-CU). The DU-CU is a device that is deployed in a radio access network and can perform wireless communication with UE. In addition, the base station may alternatively be a radio controller in a cloud radio access network (cloud radio access network, CRAN) scenario, or may be a relay station, an access point, a vehicle-mounted device, a wearable device, a network device in a future evolved public land mobile network (public land mobile network, PLMN) network, or the like. The (R)AN is mainly responsible for radio resource management, quality of service management, data compression and encryption, and the like on an air interface side. It should be noted that, in systems using different radio access technologies, names of devices having a base station function may be different. For example, the base station may be an evolved NodeB (evolved NodeB, eNB, or eNodeB) in a long term evolution (Long Term Evolution, LTE) technology, a gNB in a 5th generation (5th generation, 5G) system, or the like.
UPF: The UPF is mainly responsible for forwarding and receiving user data. The user data can be received from the DN and transmitted to the UE over the (R)AN. The UPF network element may alternatively receive the user data from the UE over the (R)AN, and forward the user data to the DN. A transmission resource and a scheduling function that are used by the UPF network element to provide a service for the UE are managed and controlled by the SMF. Specifically, functions of the UPF include: (1) Providing intra-RAT/inter-RAT mobility anchoring. (2) Providing PDN session nodes connected to external data networks. (3) Data packet routing/forwarding: The UPF may receive user data from the DN and transmit the user data to the UE over the (R)AN. The UPF may alternatively receive user data from the UE over the (R)AN and forward the user data to the DN. A transmission resource and a scheduling function that are used by the UPF network element to provide a service for the UE are managed and controlled by the SMF. (4) Executing a policy rule and data packet detection in a user plane. (5) Traffic usage reporting. (6) Uplink classification supports routing of a service flow to an external data network. (7) Supporting a branch point of a multi-connection PDU session. (8) QoS processing on a user plane, such as packet filtering, uplink and downlink traffic limiting, and selective passing. (9) Uplink service verification. (10) Uplink and downlink transport layer data packet marking. (11) Buffering a downlink data packet and triggering a downlink data indication.
DN: The DN is for example, an operator service, an Internet access service, or a third-party service that exchanges information with the UE through a PDU session. The PDU session may include a plurality of types, such as IPv4, IPv6, Ethernet protocol data, and unstructured data.
AMF: The AMF is a core network element and is responsible for processing control plane messages, and has functions such as access control, mobility management, attach and detach, and gateway selection. Specifically, functions of the AMF mainly include: (1) Processing an access network control plane. (2) Processing a NAS message, and being responsible for NAS encryption and integrity protection. (3) Registration management. (4) Connection management. (5) Accessibility management. (6) Mobility management. (7) Interception of legal information. (8) Providing a session management message between the UE and the SMF. (9) Implementing transparent transmission of routed session management (SM) messages, similar to transparent transmission proxy. (10) Access authentication. (11) Access authorization. (12) Forwarding an SMS message (short message) between the UE and a short message service function SMSF. (13) Interacting with the AUSF and the UE to obtain a UE authentication intermediate key. (14) Calculating a specific key for accessing a network.

Functions of the SMF mainly include: (1) Session management, and session establishment, modification, and release, including maintaining a channel between the UPF and the AN. (2) UE IP address allocation and management. (3) Selecting and controlling a user plane function. (4) Configuring correct service routing on the UPF. (5) Implementing the policy control function. (6) Policy execution and QoS control. (7) Lawful interception. (8) Processing session management in a NAS message. (9) Downlink data indication. (10) Initiating specific session management information of an access network (routing through the AMF). (11) Determining a service continuity mode of a session. (12) Roaming function.
AUSF: The AUSF is responsible for network security and is used to generate a key to implement bidirectional authentication for the UE, and supports a unified authentication framework.
PCF: Functions of the PCF mainly include: (1) Supporting a unified policy framework that manages network behavior. (2) Providing a policy rule to a control plane for execution. (3) Connecting to the UDR to access subscriber information related to policy decision-making.
AF: The AF is used to provide a service and is mainly used for: (1) Impact on service routing applications. (2) Network access capability exposure. (3) Interacting with a policy framework to implement policy control.
NSSF: Main functions are: selecting a group of network slice instances for the UE, determining mapping between allowed network slice information and used network slice information, and determining mapping between configured network slice information and subscribed network slice information.
UDM: The UDM includes two parts: an application front end (FE) and a user data repository (UDR). The application front end is mainly used for: (1) Authentication and credit processing. (2) User identification processing. (3) Access authorization. (4) Registration/mobility management. (5) Subscription management. (6) Short message management.
NEF: The NEF is an interface network element for bidirectional information exchange between internal and external entities of a network, and is also a logical unit for distributing and summarizing internal information. The NEF has three capabilities: a monitoring capability, a provisioning capability, and a policy/charging capability. The monitoring capability mainly refers to monitoring a special event of the UE, and outputting monitoring information to the outside. For example, the NEF may output location information, connectivity, a roaming status, and connection retention performance of the UE. The provisioning capability means that an external entity may provide, through the NEF, information for the UE to use. The information may include mobility management and session management information, such as periodic communication time, communication duration, and scheduled communication time. The policy/charging capability means that an external entity transfers requirements through the NEF to process QoS and charging policies.
NRF: The NRF is a network element that provides an internal/external addressing function.

To-be-transmitted data may be transmitted through a PDU session (that is, the communication bearer described in the specification) established between the UE and the DN. The transmission may pass through two network function entities: the (R)AN and the UPF. The UE and the (R)AN communicate with each other by using an air interface technology. N1 is a reference point between the UE and the AMF, N2 is a reference point between the (R)AN and the AMF, N3 is a reference point between the (R)AN and the UPF, N4 is a reference point between the SMF and the UPF, and N6 is a reference point between the UPF and the DN. Namf is a service-based interface presented by the AMF, Nsmf is a service-based interface presented by the SMF, Nausf is a service-based interface presented by the AUSF, Nnssf is a service-based interface presented by the NSSF, Nnef is a service-based interface presented by the NEF, Nnrf is a service-based interface presented by the NRF, Npcf is a service-based interface presented by the PCF, Nudm is a service-based interface presented by the UDM, and Naf is a service-based interface presented by the AF.

Specifically, in the method for establishing a communication bearer in the embodiments of this application, the UE is a first device or a second device. The first device or the second device may be any device that can access a network, such as a handheld device, a wearable device, a desktop device, a laptop device, or a remotely controllable device. This is not limited in the embodiments of this application.

In a possible application scenario, the foregoing method for establishing a communication bearer may be applied to a radio remote control process. For example, the method may be applied to a process of establishing a communication bearer between an aircraft (for example, an uncrewed aerial vehicle UAV) and an aircraft controller (for example, an uncrewed aerial vehicle controller UAC).

The UAC needs to send control data such as navigation commands, path point settings, configuration adjustment, data requests, and security instructions to the UAV to implement flight control, operation control, and the like of the UAV. In addition, the UAV needs to report instruction responses to the UAC, flight status data (a position, an altitude, a speed, power, and the like) of the UAV, obtained monitoring data, and the like. That is, C2 communication needs to be performed between the UAC and the UAV

For short-range uncrewed aerial vehicle flight, control data may be transmitted between the UAC and the UAV over a dedicated network such as a wireless local area network (Wireless Local Area Network, WLAN). For long-distance uncrewed aerial vehicle flight, advantages of a mobile cellular network, such as wide coverage, can be used. When accessing a network of an operator, the UAV can be controlled during the flight in any area covered by the network of the operator.

As shown in FIG. 2, the first device is a UAC 210, and the second device is a UAV 220. The UAC 210 may carry a communication terminal 211 (for example, a touchscreen intelligent terminal). The UAV may carry an image obtaining terminal 221 (for example, a camera) with a communication function. Optionally, the communication terminal 211 and the image obtaining terminal 221 may be separately integrated into the UAC 210 and the UAV 220. The UAV 220 and the UAC 210 have a pairing relationship. To be specific, the UAC 210 controls flight, data collection, and the like of the UAV 220. The UAV 220 needs to perform a flight mission and perform an operation based on control information of the UAC 210, and report flight information, operation information, and the like of the UAV 220 to the UAC 210.

To successfully complete transmission of control data between the UAC 210 and the UAV 220, a communication bearer between the UAC 210 and the UAV 220 needs to be established. Therefore, the communication bearer between the UAC 210 and the UAV 220 needs to be established with participation of a network device.

It should be noted that the network service architecture and the service scenario described in the embodiments of this application are intended to describe the technical solutions in the embodiments of this application more clearly, and do not constitute a limitation on the network service architecture and an application scenario to which the method for establishing a communication bearer provided in the embodiments of this application is applicable. A person of ordinary skill in the art may know that with the evolution of the network service architecture and emergence of a new service scenario, the technical solutions provided in the embodiments of this application are also applicable to similar technical problems.

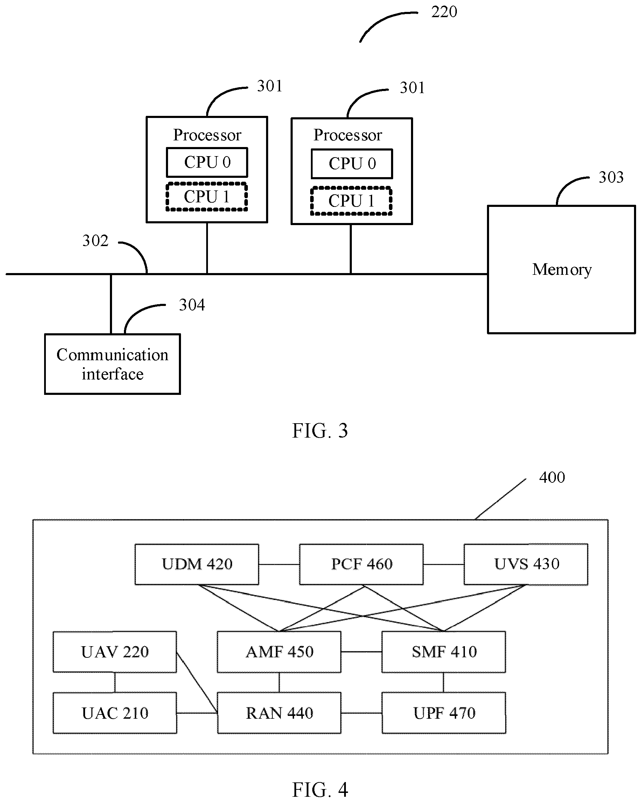

FIG. 3 describes hardware structures of the first device or the second device by using an uncrewed aerial vehicle UAV 220 as an example. As shown in FIG. 3, the UAV 220 may include a processor 301, a communication line 302, a memory 303, and at least one communication interface (in FIG. 3, only an example in which a communication interface 304 is included is used for description).

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application. The processor 301 may include one or more CPUs, for example, a CPU 0 and a CPU 1 in FIG. 3.

The communication line 302 may include a path transmitting information between the foregoing components.

The communication interface 304 is any apparatus such as a transceiver, and is configured to communicate with another device or communication network such as Ethernet, a radio access network (radio access network, RAN), or a wireless local area network (wireless local area network, WLAN).

The memory 303 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another optical disc storage, an optical disc storage (including a compressed optical disc, a laser disc, an optical disc, a digital versatile disc, a Blu-ray disc, or the like), a magnetic disk storage medium or another magnetic storage device, or any other medium that can be configured to carry or store expected program code in a form of an instruction or a data structure and that can be accessed by a computer, but is not limited thereto. The memory may exist independently, and be connected to the processor by using the communication line 302. The memory may alternatively be integrated with the processor.

The memory 303 is configured to store computer-executable instructions for executing the solutions of this application. The memory 303 may store the instructions, and the processor 301 controls execution of the instructions. The processor 301 is configured to execute the computer-executable instructions stored in the memory 303, to implement the method for establishing a communication bearer provided in the following embodiments of this application. FIG. 3 is merely a schematic diagram of the memory 303. The memory may further include other function instructions which are not limited in the present invention.

It should be noted that a hardware structure of the UAV 220 is briefly described by using the UAV 220 as an example in FIG. 3. The UAC 210 may also have a same or similar hardware structure as the UAV 220.

In an existing possible solution, to establish a communication bearer between the UAC 210 and the UAV 220 in the scenario shown in FIG. 2, an uncrewed aerial vehicle server UVS may provide an application service for the UAC 210 and the UAV 220, to support functions of the uncrewed aerial vehicle UAV such as registration, flight plan approval, flight path planning, flight operation authorization, flight monitoring, and flight control. The UVS stores registration information, and the registration information includes the pairing relationship between the UAV and the UAC.

Optionally, the UVS may be considered as an AF in a 5G mobile communication network, or may be located in the DN, or may be a function module in uncrewed aerial vehicle traffic management (unmanned aerial vehicle traffic management, UTM) or a third-party uncrewed aerial vehicle cloud.

However, the foregoing possible solution is not applicable to a case in which no corresponding server is configured for the UAC 210 or the UAV 220. That is, without participation of the uncrewed aerial vehicle server UVS, a bearer between the UAC 210 and the UAV 220 cannot be established. In addition, even if corresponding UVSs are configured for both the UAC 210 and the UAV 220, because the bearer between the UAC 210 and the UAV 220 needs to be established with the participation of the UVS, a delay is still relatively large. For example, when the UAV 220 flies beyond the line of sight, a delay requirement for control data is relatively strict. For example, a delay is required to be within 100 ms to 10 ms. However, it is clear that the foregoing possible solutions cannot meet the delay requirement.

To resolve the foregoing problem, the present invention provides a method for establishing a communication bearer. A PDU session and a communication bearer may be established by using control plane configurations, so that a data transmission path can be effectively shortened, and a transmission delay can be reduced.

The following specifically describes the method for establishing a communication bearer provided in the embodiments of this application with reference to FIG. 1 to FIG. 3 by using an example in which the UAC 210 and the UAV 220 are established.

A basic principle of the method in the embodiments of this application is as follows: The UAC 210 initiates a communication bearer establishment request, and sends a request message to the SMF, where the request message carries indication information for establishing the communication bearer. The SMF registers IP address information and status information of a bearer of the UAC 210 with the UDM based on the indication information for establishing the communication bearer. The SMF obtains, from the UVS or the UDM based on bearer information of the UAV 220, device information of the UAC 210 paired with the UAC 210. The SMF obtains a bearer status and the bearer information of the UAV 220 from the UDM based on the device information of the UAV 220. Finally, the SMF sends a response message to the UAC 210, to indicate the UAC 210 to transmit communication information to the UAV 220.

It should be noted that, the following embodiments describe the method for establishing a communication bearer only by using the network service architecture shown in FIG. 1 as an example. The service architecture and network device entities, network functions, and the like in the method are not specifically limited. This method is also applicable to other service architectures. Specifically, the following embodiments describe the method by using a first system 400 as an example. As shown in FIG. 4, the first system 400 may include a UAC 210, a UAV 220, an SMF 410, a UDM 420, a RAN 440, an AMF 450, a PCF 460, and a UPF 470. The first system 400 may further include a UVS 430.

It should be noted that in the following embodiments, only an example in which the first device is the UAC 210 and the second device is the UAV 220 is used. Actually, a same manner and method may be used to establish a communication bearer for any type of first device, including the several types of first devices listed above. In addition, if the communication bearer establishment request is initiated by the UAV 220 (that is, initiated by the second device), the method for establishing a communication bearer in the embodiments of this application is also applicable. In addition, the following embodiments, a case in which a first network device is an SMF 410, a second network device is a UPF 470, a third network device is a UVS 430, a fourth network device is a UDM 420, a fifth network device is an SMF (for example, an SMF 2) to which the UAV 220 belongs, and a sixth network device is a PCF 460 is used only as an example. For a case in which the first network device, the second network device, the third network device, the fourth network device, and the fifth network device are network devices of other types, refer to the embodiments of this application.

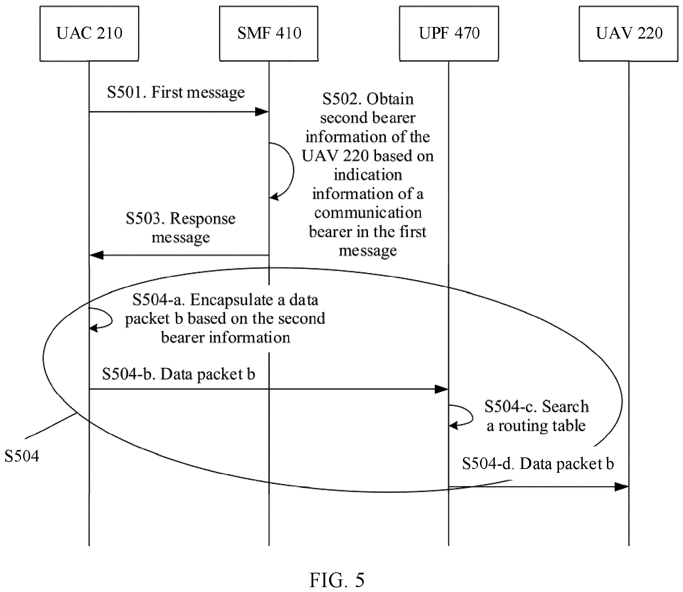

As shown in FIG. 5, the method for establishing a communication bearer in the embodiments of this application may include the following steps.
S501. The UAC 210 sends a first message to the SMF 410.

The first message includes indication information of a communication bearer. In a possible implementation, the indication information of the communication bearer may include explicit indication information and implicit indication information. The explicit indication information is used to identify the indication information of the communication bearer, and is used to request to establish the communication bearer. The communication bearer is used to transmit communication information between the UAC 210 and the UAV 220. For example, the explicit indication information may include network slice information, data network information, and/or control link information. The network slice information, the data network information, or the control link information is used to identify the indication information of the communication bearer, and is used to establish a control communication link or establish a local switching (local switching) link. The network slice information may be single network slice selection support information (Single Network Slice Selection Assistance Information, S-NSSAI), and the data network information may be a data network name (Data Network Name, DNN).

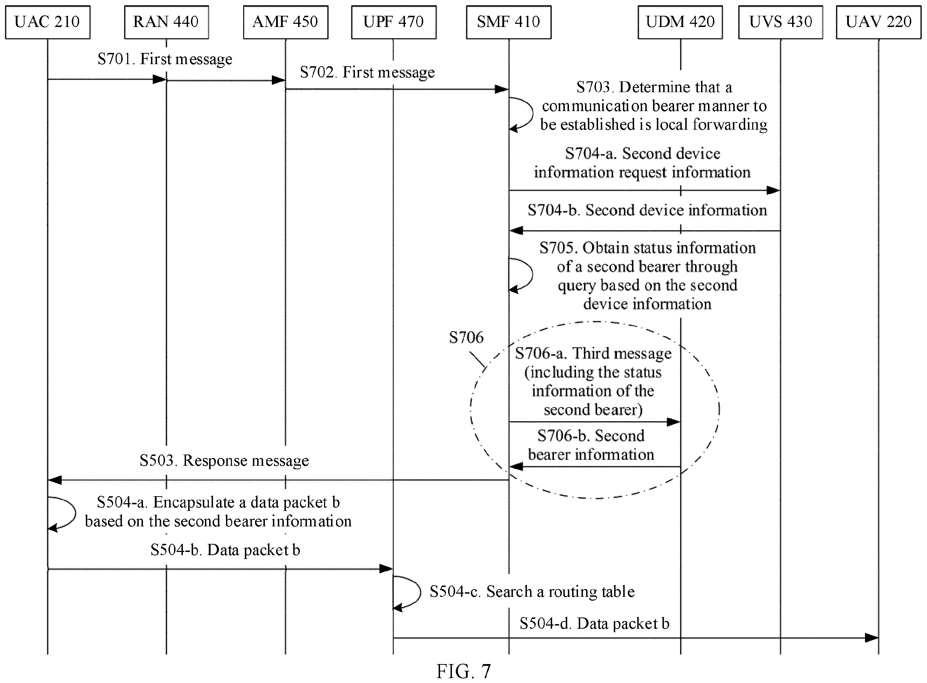

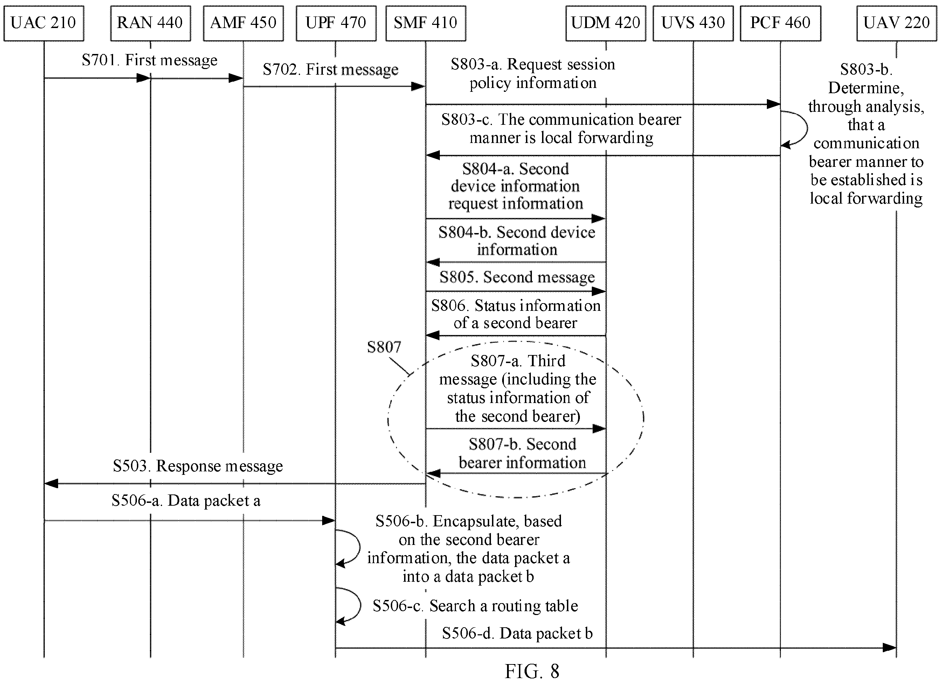

In a possible implementation, the UAC 210 may send the first message to the SMF 410 through a radio access network entity RAN 440 and a control plane network function AMF 450. That is, S501 may be completed by performing S701 and S702 in FIG. 7 or FIG. 8.
S502. The SMF 410 obtains second bearer information of the UAV 220 based on the indication information of the communication bearer in the first message.

The second bearer information is used to identify address information of the UAV 220. The second bearer information of the UAV 220 may include the address information of the UAV 220, for example, an Internet Protocol (Internet Protocol, IP) address of the UAV 220. In a possible implementation, after a first bearer is established, the method for establishing a communication bearer in the embodiments further includes: The SMF 410 sends a fourth message to the UDM 420. The fourth message is used to indicate the UDM 420 to store the information carried in the fourth message. The fourth message may include at least one of status information of the first bearer, first device information, first bearer information, and storage location information of the first bearer information.

Similarly, after the first bearer is established, if a second bearer is established, the SMF 410 may also send, to the UDM 420, at least one of the following information: status information of the second bearer, second device information, the second bearer information, and storage location information of the second bearer information, to indicate the UDM 420 to store the foregoing information.

After the UDM 420 receives the fourth message, the UDM 420 may locally store all the information carried in the fourth message.

The first device information is used to identify a device identity of the UAC 210, for example, a subscription permanent identifier (Subscription Permanent Identifier, SUPI) (which is similar to an international mobile subscriber identity (International Mobile Subscriber Identity, IMSI)) of the UAC 210, a subscription concealed identifier (Subscription Concealed Identifier, SUCI) of the UAC 210, or a permanent equipment identifier (Permanent Equipment Identifier, PEI) (which is similar to a mobile equipment identifier (Mobile Equipment Identifier, MEID)) of the UAC 210.

The storage location information of the first bearer information is used to identify a storage location of bearer information of the UAC 210. For example, for the network architecture shown in FIG. 1, the bearer information of the UAC 210 may be stored in the UDM 420 or the SMF 410.

The status information of the first bearer is used to identify a bearer establishment status (including established and unestablished) of the UAC 210. If a bearer of the UAC 210 has been established, the SMF 410 may store the bearer information of the UAC 210 in the UDM 420 or the SMF 410. The most direct manifestation is that the UAC 210 may successfully obtain the bearer information (that is, the first bearer information) of the UAC 210.

For the status information of the second bearer, the second device information, the second bearer information, and the storage location information of the second bearer information, refer to the foregoing descriptions.
S503. The SMF 410 sends a response message to the UAC 210.

The SMF 410 may send the response message to the UAC 210 through the control plane network function AMF 450 and the radio access network entity RAN 440.

The response message is used to notify the UAC 210 that the communication bearer is established. The response message may include the second bearer information, or may not include the second bearer information. That is, the message may be sent by the SMF 410 to the UAC 210 in the following two implementations:
Implementation 1: The response message includes the second bearer information.
Implementation 2: The response message does not include the second bearer information.

The response message in Implementation 1 is used to indicate the UAC 210 to transmit the communication information to the UAV 220 based on the second bearer information. The communication information may be transmitted to the UAV 220 in a form of an encapsulated data packet. For Implementation 2, the UPF 470 reencapsulates, based on the second bearer information, a data packet that is to be sent from the UAC 210 to the UAV 220. A specific process is described in detail below.

In a possible implementation, the SMF 410 may send the response message to the UAC 210 over the RAN 440, and after receiving the response message, the RAN 440 may establish a radio air interface bearer with the UAC 210.
S504. The UAC 210 sends a data packet to the UAV 220.

For Implementation 1 above, the response message includes the second bearer information, S504 in FIG. 5, that is, the UAC 210 sends a data packet to the UAV 220 may be implemented by performing S504-a, S504-b, S504-c, and S504-d in FIG. 5.
S504-a. The UAC 210 encapsulates, based on the second bearer information, a data packet b transmitted on the communication bearer between the UAC 210 and the UAV 220.

The UAC 210 may modify, based on the second bearer information, destination address information of a data packet sent to the UAV 220 through the UPF 470 to the second bearer information, and encapsulate the data packet into the data packet b. The second bearer information is used to identify receive-end address information (for example, IP address information of the UAV 220) of the data packet.
S504-b. The UAC 210 sends the encapsulated data packet b to the UPF 470.
S504-c. The UPF 470 searches a routing table to determine routing information corresponding to the second bearer information.
S504-d. The UPF 470 sends the data packet b to the UAV 220 based on the found routing information.

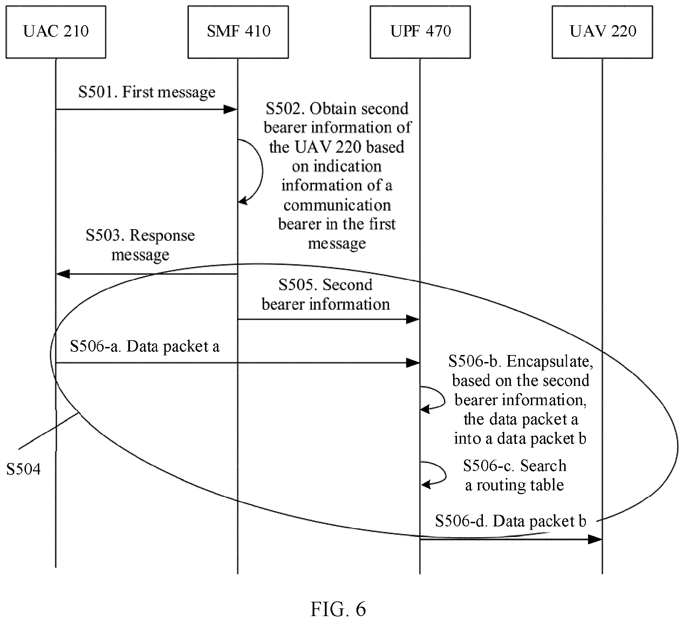

For Implementation 2 above, that is, the response message does not include the second bearer information, S504 in FIG. 5, that is, the UAC 210 sends a data packet to the UAV 220 may be implemented by performing S505, S506-a, S506-b, S506-c, and S506-d in FIG. 6.
S505. The SMF 410 sends the second bearer information to the UPF 470.

The second bearer information is used to indicate the UPF 470 to establish the communication bearer between the UAC 210 and the UAV 220 based on the second bearer information.
S506-a. The UAC 210 sends a data packet a to the UPF 470.

A receive end of the data packet, that is, the UAV 220, is not identified in the data packet. In other words, the second bearer information is not identified.

In a possible implementation, destination address information of the data packet a is address information of the UVS.
S506-b. The UPF 470 reencapsulates the detected data packet a into the data packet b based on the second bearer information.

In a possible implementation, the UPF 470 may detect, according to a data packet detection rule, the data packet transmitted on the communication bearer between the UAC 210 and the UAV 220. If detecting the data packet a, the UPF 470 modifies the receive-end address information of the data packet to the address information of the UAV 220, for example, the IP address information of the UAV 220.

The data packet detection rule may be obtained by the UPF 470 from the SMF 410 through an N4 reference point. Specifically, the UPF 470 may receive data packet detection indication information from the SMF 410, and the data packet detection indication information may include data packet detection rules (such as a group detection rule, detection tunnel information, a detection report rule, and an execution rule).

In a possible implementation, the data packet detection rule may be a detection rule for detecting a data packet whose destination address is UVS address information.
S506-c. The UPF 470 searches a routing table to determine routing information corresponding to the second bearer information.
S506-d. The UPF 470 sends the data packet b to the UAV 220 based on the found routing information.

Specifically, the UPF 470 may determine, by searching the routing table, the routing information corresponding to the second bearer information, and correspondingly send the data packet b to the UAV 220.

Before S504, that is, before the UAC 210 sends a data packet to the UAV 220, the method for establishing a communication bearer in the embodiments of this application may further include: The SMF 410 establishes the first bearer of the UAC 210.

The first bearer is a part of the communication bearer to be established. Specifically, the first bearer includes an N3 tunnel (represented by N3 in FIG. 1) between the RAN 440 and the UPF 470 and a radio air interface bearer between the RAN 440 and the UAC 210.

In a possible implementation, the SMF 410 selects a data plane function entity UPF 470 for a session bearer of the UAC 210, and allocates the address information to the UAC 210 and address information of the N3 tunnel on the UPF 470 side to the UPF 470. The SMF 410 sends the address information to the UAC 210 through the control plane network function AMF 450, and sends the address information of the N3 tunnel on the UPF 470 side to the radio access network entity RAN 440 through the control plane network function AMF 450. The radio access network entity RAN 440 allocates address information of the N3 tunnel on the RAN 440 side, notifies the UPF 470 of the address information through the SMF 410, and establishes a radio air interface bearer with the UAC 210.

In a possible implementation, after the SMF 410 receives the indication information of the communication bearer in the first message, the SMF 410 may determine, based on specific indication content of the indication information of the communication bearer, whether to obtain the second bearer information. For example, if the SMF 410 determines that a communication bearer manner to be established by the SMF 410 is local switching, the SMF 410 obtains the second bearer information of the UAV 220.

In a possible implementation, that the SMF 410 determines whether the communication bearer manner to be established is local switching may be implemented by performing S703 in FIG. 7.
S703. The SMF 410 parses the indication information of the communication bearer in the first message and the first device information, and determines that the communication bearer manner to be established is local switching.

Alternatively, in another possible implementation, that the SMF 410 determines whether the communication bearer manner to be established is local switching may be implemented by performing S803-a, S803-b, and S803-c in FIG. 8.
S803-a. The SMF 410 requests session policy information from the PCF 460.

The requested session policy information includes the indication information of the communication bearer and the first device information of the UAC 210.
S803-b. The PCF 460 determines, through analysis based on the first device information and the indication information of the communication bearer, that the communication bearer manner to be established is local switching.
S803-c. The PCF 460 indicates the SMF 410 that the communication bearer manner is local switching.

The indication information of the communication bearer may be the implicit indication information, and is used to identify the device information. For example, the first message may further include the first device information of the UAC 210. The indication information of the communication bearer may alternatively be the explicit indication information, and is specifically the network slice information, the data network information, and/or the control link information. The first message may further include the network slice information, the data network information, and/or the control link information.

Alternatively, in another possible implementation, the SMF 410 parses the indication information of the communication bearer in the first message and the first device information, and obtains the session policy information from the PCF 460. The SMF 410 determines, based on the session policy information, that the communication bearer manner to be established is local switching.

In a possible implementation, S502 may be completed by any one of the following Implementation A, Implementation B, Implementation C, or Implementation D.

Implementation A: S502 may be completed by performing S705 and S706 in FIG. 7.
S705. The SMF 410 obtains the status information of the second bearer through query based on the second device information.

In Implementation A, the status information of the second bearer is stored in the SMF 410.

The second device information is used to identify a device identity of the UAV 220. Sources of the second device information may include the following two types:

Source 1: The second device information is from the first message.

Specifically, the first message may further include the second device information of the UAV 220 (for example, an SUPI, an SUCI or a PEI of the UAV 220). Alternatively, the first message may further include an identity (for example, a UAS ID) of an uncrewed aerial vehicle system (Unmanned Aerial Vehicle System, UAS).

Source 2: The second device information is obtained by the SMF 410 from the UVS 430 (that is, S704-a and S704-b in FIG. 7). Alternatively, the second device information is obtained by the SMF 410 from the UDM 420 (that is, S804-a and S804-b in FIG. 8).

Specifically, the UVS 430 or the UDM 420 may store pairing information of all devices, including pairing information of the first device and the second device, or a correspondence between the first device, the second device, and the UAS. The SMF 410 may request, from the UVS 430 or the UDM 420, to obtain the second device information of the UAV 220 paired with the UAC 210.

In a possible implementation, the pairing information stored in the UVS 430 or the UDM 420 may be dynamically adjusted. For example, because a fault occurs on a UAC A, a pairing relationship between a UAV A and the UAC A stored in the UVS 430 or the UDM 420 is temporarily adjusted to a pairing relationship between a UAC B and the UAV A. That is, the UAC B controls flight processes and missions such as the flight and operation of the UAV A through the control communication.
S706. The SMF 410 obtains the second bearer information based on the status information of the second bearer.

As described above, similarly, if the status information of the second bearer of the UAV 220 is established, correspondingly, the SMF 410 stores the second bearer information in the SMF 410. When the second bearer information is required, the SMF 410 may successfully obtain the second bearer information.

Implementation B: S502 may be completed by performing S805 to S807 in FIG. 8.
S805. The SMF 410 sends a second message to the UDM 420.

In Implementation B, the status information of the second bearer is stored in the UDM 420. The second message is used to request to obtain the status information of the second bearer.

In Implementation B, the source of the second device information may be Source 1 or Source 2.
S806. The SMF 410 receives the status information of the second bearer from the UDM 420.
S807. The SMF 410 obtains the second bearer information based on the status information of the second bearer.

In Implementation B, the second bearer information is stored in the UDM 420.

Implementation C: S502 may be completed by using the following process: The SMF 410 subscribes to the status information of the second bearer and the second bearer information that are of the UAV 220 from the UDM 420. If the second bearer is successfully established, and the status information of the second bearer and the second bearer information have been registered or stored in the UDM 420, the UDM 420 sends the status information of the second bearer and the second bearer information to the SMF 410.

In Implementation C, the status information of the second bearer and the second bearer information are stored in the UDM 420.

Implementation D: S502 may be completed by using a process similar to S805 to S807 in FIG. 8. For details, refer to FIG. 8.

In Implementation D, the second bearer information is stored in the UDM 420. The SMF 410 may directly obtain the second bearer information from the UDM 420.

It should be noted that Implementation A, Implementation B, Implementation C, and Implementation D described above are merely used as four examples to describe the implementations of S502. S502 may alternatively be completed in another implementation. For example, the status information of the second bearer is stored in the SMF 410, and the second bearer information is stored in the UDM 420. For another example, the status information of the second bearer is stored in the UDM 420, and the second bearer information is stored in the SMF 410.

If the second bearer information is stored in the UDM 420, S706 or S807 may be implemented by using the following process: The SMF 410 sends a third message to the UDM 420, to request to obtain the second bearer information (that is, S706-a in FIG. 7, or S807-a in FIG. 8). The third message includes the status information of the second bearer. The SMF 410 obtains the second bearer information from the UDM 420 (that is, S706-b in FIG. 7, or S807-b in FIG. 8).

Alternatively, if the second bearer information is not stored in the UDM 420, S706 or S807 may be implemented by using the following process: The SMF 410 obtains the storage location information of the second bearer information from the UDM 420. The SMF 410 obtains the second bearer information from a storage location indicated by the storage location information.

For example, the UAC 210 and the UAV 220 belong to different SMFs. For example, the UAC 210 belongs to an SMF 1, and the UAV 220 belongs to an SMF 2. That the UAC 210 belongs to an SMF 1 may be understood as that the SMF 1 is responsible for establishing a session bearer of the UAC 210. The second bearer information of the UAV 220 is stored in the SMF 2 to which the UAV 220 belongs. Therefore, the UAC 210 cannot obtain the second bearer information from the UDM 420. However, the UDM 420 may store a storage address of the second bearer information, and the UAC 210 may obtain the storage address of the second bearer information from the UDM 420, and further request to obtain the second bearer information from the storage address.

That is, for a specific configuration in which the UAC 210 belongs to the SMF 1, and the UAV 220 belongs to the SMF 2, the SMF 1 may further exchange pairing forwarding information of the first bearer and the second bearer with the SMF 2. The pairing forwarding information of the first bearer and the second bearer may include the first bearer information and the second bearer information.

In a possible implementation, if the UAC 210 and the UAV 220 belong to different SMFs, and the UAC 210 and the UAV 220 belong to a same UPF, that the UAC 210 and the UAV 220 belong to a same UPF may be understood that session bearers of the UAC 210 and the UAV 220 are forwarded by a same UPF. For example, the UAC 210 belongs to the SMF 1, and the UAV 220 belongs to the SMF 2. The UAC 210 and the UAV 220 belong to a UPF 1. The method provided in the embodiments of this application may further include: The SMF 1 and the SMF 2 select a same UPF (namely, the UPF 1) for the UAC 210 and the UAV 220, and on a basis that the SMF 1 and the SMF 2 exchange the first bearer information and the second bearer information with the UDM, the SMF 1 sends the second bearer information to the UAC 210 or the UPF 1, and the SMF 2 sends the first bearer information to the UAV 220 or the UPF 1, to complete establishment of the communication bearer between the UAC 210 and the UAV 220.

In a possible implementation, if the UAC 210 and the UAV 220 belong to a same SMF, and the UAC 210 and the UAV 220 belong to different UPFs, for example, the UAC 210 belongs to the UPF 1, the UAV 220 belongs to the UPF 2, and the UAC 210 and the UAV 220 belong to the SMF 1, the method provided in the embodiments of this application may further include: The SMF 1 selects the UPF 1 for the UAC 210 and selects the UPF 2 for the UAV 220, and on a basis that the SMF 1 exchanges the first bearer information and the second bearer information with the UDM, the SMF 1 sends the second bearer information to the UAC 210 or the UPF 1, the SMF 1 sends the first bearer information to the UAV 220 or the UPF 2, and the SMF 1 establishes a forwarding tunnel between the UPF 1 and the UPF 2, to complete establishment of the communication bearer between the UAC 210 and the UAV 220.

In a possible implementation, if the UAC 210 and the UAV 220 belong to different SMFs, and the UAC 210 and the UAV 220 belong to different UPFs, for example, the UAC 210 belongs to the SMF 1 and the UPF 1, and the UAV 220 belongs to the SMF 2 and the UPF 2, the method provided in the embodiments of this application may further include: The SMF 1 selects the UPF 1 for the UAC 210 and the SMF 2 selects the UPF 2 for the UAV 220, and on a basis that the SMF 1 and the SMF 2 separately exchange the first bearer information and the second bearer information with the UDM, the SMF 1 sends the second bearer information to the UAC 210 or the UPF 1, the SMF 2 sends the first bearer information to the UAV 220 or the UPF 2, and the SMF 1 and the SMF 2 establish a forwarding tunnel between the UPF 1 and the UPF 2, to complete establishment of the communication bearer between the UAC 210 and the UAV 220. The SMF 1 and the SMF 2 may establish the forwarding tunnel between the UPF 1 and the UPF 2 by using the following interaction process: The SMF 1 allocates an address of a tunnel endpoint on the UPF 1. The SMF 1 obtains an address of the SMF 2 from the UDM and sends the address of the tunnel endpoint on the UPF 1 to the SMF 2 and the UPF 2. The SMF 1 allocates an address of a tunnel endpoint on the UPF 2 and sends the address to the SMF 1 and the UPF 1.

If the status information of the second bearer obtained by performing S705 and S706 in FIG. 7 and S805 to S807 in FIG. 8 is that the second bearer is not established, or the second bearer information is not obtained, it indicates that the second bearer of the UAV 220 has not been established. Alternatively, if the status information of the second bearer obtained by performing S705 and S706 in FIG. 7 and S805 to S807 in FIG. 8 is that the second bearer is not activated, the method in the embodiments may further include: The SMF 410 triggers establishment of the UAV 220 or activation of the second bearer. Specifically, the SMF 410 may send a notification message to the UAV 220 through the control plane network function AMF 450 and the radio access network entity RAN 440. The notification message indicates the UAV 220 to establish or activate the second bearer, and is used to transmit the communication information between the UAC 210 and the UAV 220. The SMF 410 may further subscribe to a bearer information update notification of the UAV 220 from the UDM 420, where the bearer information update notification is used to indicate the UDM 420 to send the second bearer information of the UAV 220 to the SMF 410 after the second bearer information is updated. After the second bearer is established or activated, similar to the process performed after the first bearer is established, the SMF 410 may locally store at least one of the following information: the status information of the second bearer, the second device information, the second bearer information, and the storage location information of the second bearer information, or send the at least one of the information to the UDM 420, to indicate the UDM 420 to store the foregoing information. If the SMF 410 subscribes to a bearer information update notification of the UAV 220 from the UDM 420, the UDM 420 may actively send the second bearer information to the SMF 410 after the second bearer information is updated, to continue a subsequent process.

In a possible implementation, the method provided in this embodiment may further include: The SMF 410 sends a fifth message to the UAV 220. Alternatively, the SMF 410 sends a sixth message to the UPF 470.

The fifth message or the sixth message may include the first bearer information, and the first bearer information is used to establish the communication bearer. If the fifth message includes the first bearer information, the fifth message is used to indicate the UAV 220 to transmit the communication information to the UAC 210 based on the first bearer information. If the sixth message includes the first bearer information, the sixth message is used to indicate the UPF 470 to reencapsulate, based on the first bearer information, a data packet sent from the UAV 220 to the UAC 210. The first bearer information may include the address information of the UAC 210 (for example, an IP address of the UAC 210).

For example, the SMF 410 sends the IP address of the UAC 210 to the UAV 220, and the UAV 220 may encapsulate, based on the IP address of the UAC 210, a communication data packet related to flight control, and send flight status information to the UAC 210.

For another example, the SMF 410 sends the IP address of the UAC 210 to the UPF 470, and after receiving a flight path request from the UAC 210, the UAV 220 needs to send flight path control information to the UAC 210 through the UPF 470. In this case, the UPF 470 may forward the flight path control information to the UAC 210 based on the received IP address of the UAC 210.

In a possible implementation, the UAC 210 may send the IP address of the UAC 210 to the UAV 220 through the established communication bearer (for example, when sending the communication information to the UAV 220, the UAC 210 carries the IP address of the UAC 210), so that the UAV 220 sends communication information to the UAC 210 based on the IP address.

It should be noted that in the embodiments of this application, only an example in which the UAC 210 initiates a request for establishing a communication bearer is used, and an initiator of establishing the communication bearer is not limited. In other words, for a process in which the UAV 220 initiates the establishment of the communication bearer, the method described in the embodiments of this application is also applicable.

It may be understood that, to implement a function of any one of the foregoing embodiments, the UAC 210, the UAV 220, the SMF 410, the UDM 420, the UVS 430, the RAN 440, the AMF 450, the PCF 460, the UPF 470, and the like in the embodiments include a corresponding hardware structure and/or software module for executing each function. A person skilled in the art should easily be aware that, in combination with units and algorithm steps of the examples described in the embodiments disclosed in this specification, this application may be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In the embodiments of this application, function module division may be performed on the foregoing entity or function unit. For example, each function module corresponding to each function may be obtained through division, or two or more functions may be integrated into one processing module. The integrated module may be implemented in a form of hardware, or may be implemented in a form of a software function module. It should be noted that module division in the embodiments of this application is an example, and is merely logical function division. During actual implementation, another division manner may be used.

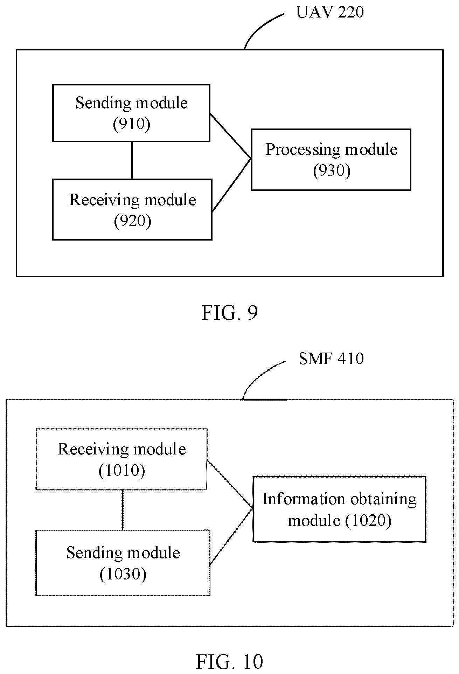

For example, when function modules are obtained in an integrated manner, FIG. 9 is a schematic diagram of a structure of a UAV 220 according to an embodiment of this application. The UAV 220 may include a sending module 910, a receiving module 920, and a processing module 930. The sending module 910 is configured to send a first message to an SMF 410. The receiving module 920 is configured to receive a response message from the SMF 410. The processing module 930 is configured to establish a communication bearer with a UAC 210 based on the response message.

It should be noted that the UAC 210 may have the same structure as the UAV 220.

It should be noted that the UAV 220 and the UAC 210 each may further include a radio frequency circuit, configured to receive and send a wireless signal in a communication process. For example, the radio frequency circuit of the UAV 220 may send uplink-related data to a RAN 440. The radio frequency circuit usually includes but is not limited to an antenna, at least one amplifier, a transceiver, a coupler, a low noise amplifier, a duplexer, and the like. In addition, the radio frequency circuit may further communicate with another device through wireless communication. The wireless communication may be implemented by using any communication standard or protocol, including but not limited to a global system for mobile communications, a general packet radio service, code division multiple access, wideband code division multiple access, long term evolution, an email, a short message service, and the like.

FIG. 10 is a schematic diagram of a structure of an SMF 410 according to an embodiment of this application. The SMF 410 may include a receiving module 1010, an information obtaining module 1020, and a sending module 1030. The receiving module 1010 is configured to receive a first message from a UAV 220. The information obtaining module 1020 is configured to obtain second bearer information of a UAC 210 based on indication information of a communication bearer. The sending module 1030 is configured to send a response message to the UAV 220 and/or send the second bearer information to a UPF 470. The receiving module 1010 may be further configured to receive information from another device, module, or unit, and the sending module 1030 is further configured to send information to the another device, module, or unit.

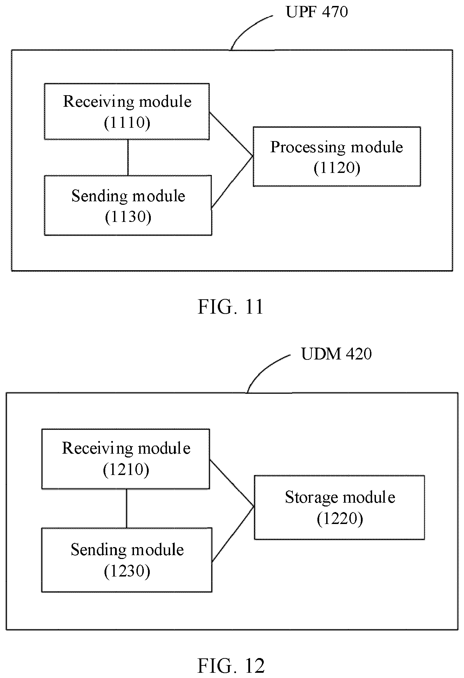

FIG. 11 is a schematic diagram of a structure of a UPF 470 according to an embodiment of this application. The UPF 470 may include a receiving module 1110, a processing module 1120, and a sending module 1130. The receiving module 1110 is configured to receive second bearer information from an SMF 410. The processing module 1120 is configured to: establish a communication bearer between a UAC 210 and a UAV 220 based on the second bearer information, and modify receiver information of a detected data packet to address information of the UAC 210 based on the second bearer information. The sending module 1130 is configured to forward the data packet from the UAV 220 to the UAC 210.

FIG. 12 is a schematic diagram of a structure of a UDM 420 according to an embodiment of this application. The UDM 420 may include a receiving module 1210, a storage module 1220, and a sending module 1230. The receiving module 1210 is configured to receive, from an SMF 410, a request message for requesting to obtain related information. The storage module 1220 is configured to store any one of the following information: status information of a first bearer, status information of a second bearer, second device information, first device information, first bearer information, second bearer information, storage location information of the second bearer information, and storage location information of the first bearer information. The sending module 1230 is configured to send the at least one of the foregoing information in the storage module 1220 to the SMF 410.

In an optional manner, when data transmission is implemented by using software, all or some of the data transmission may be implemented in a form of a computer program product. The computer program product includes one or more computer instructions. When the computer program instructions are loaded and executed on a computer, all or some of the procedures or functions in the embodiments of this application are implemented. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive Solid-State Drive (SSD)), or the like.

Method or algorithm steps described in combination with the embodiments of this application may be implemented by hardware, or may be implemented by a processor by executing a software instruction. The software instruction may be formed by a corresponding software module. The software module may be located in a RAM memory, a flash memory, a ROM memory, an EPROM memory, an EEPROM memory, a register, a hard disk, a removable magnetic disk, a CD-ROM, or a storage medium of any other form known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in the detection apparatus. Certainly, the processor and the storage medium may exist in the detection apparatus as separate components.

The foregoing descriptions about implementations allow a person skilled in the art to understand that, for the purpose of convenient and brief description, division of the foregoing function modules is used as an example for illustration. In actual application, the foregoing functions can be allocated to different modules and implemented according to a requirement, that is, an inner structure of an apparatus is divided into different function modules to implement all or some of the functions described above.

In the several embodiments provided in this application, it should be understood that the disclosed user equipment and method may be implemented in other manners. For example, the described apparatus embodiment is merely an example. For example, the module or unit division is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate parts may or may not be physically separate, and parts displayed as units may be one or more physical units, may be located in one place, or may be distributed at different places. Some or all of the units may be selected based on an actual requirement to achieve an objective of the solutions of the embodiments.

In addition, function units in the embodiments of this application may be integrated into one processing unit, or each of the units may exist alone physically, or two or more units are integrated into one unit. The integrated unit may be implemented in a form of hardware, or may be implemented in a form of a software function unit.

When the integrated unit is implemented in a form of a software function unit and sold or used as an independent product, the integrated unit may be stored in a readable storage medium. Based on such an understanding, the technical solutions of the embodiments of this application essentially, or the part contributing to the conventional technology, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the method described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for establishing a communication bearer, wherein the method is applied to a first network device, and comprises:
receiving, by the first network device, a first message from a first device, wherein the first message is used to request to establish a communication bearer, the communication bearer is used to transmit communication information between the first device and a second device, and the first message comprises indication information of the communication bearer;
obtaining, by the first network device, second bearer information of the second device based on the indication information of the communication bearer, wherein the second bearer information is used to establish the communication bearer, and the second bearer information comprises address information of the second device; and
sending, by the first network device, a response message to the first device.

2. The method according to claim 1, wherein the response message comprises the second bearer information.

3. The method according to claim 1, wherein after the obtaining, by the first network device, second bearer information of the second device based on the indication information of the communication bearer, the method further comprises:
sending, by the first network device, the second bearer information to a second network device.

4. The method according to any one of claims 1 to 3, wherein the obtaining, by the first network device, second bearer information of the second device based on the indication information of the communication bearer comprises:
in response to the received indication information of the communication bearer, obtaining, by the first network device, status information of a second bearer based on second device information; and
obtaining, by the first network device, the second bearer information based on the status information of the second bearer, wherein
the second device information is comprised in the first message that is received by the first network device from the first device; or
the first network device obtains the second device information from a third network device.

5. The method according to claim 4, wherein the obtaining, by the first network device, status information of a second bearer based on second device information comprises:
obtaining, by the first network device through query based on the second device information, the status information of the second bearer, wherein the status information of the second bearer is stored in the first network device;
or
sending, by the first network device, a second message to a fourth network device, to request to obtain the status information of the second bearer, wherein the second message comprises the second device information; and
receiving, by the first network device, the status information of the second bearer from the fourth network device.

6. The method according to claim 4 or 5, wherein the obtaining, by the first network device, the second bearer information based on the status information of the second bearer comprises:
sending, by the first network device, a third message to the fourth network device, to request to obtain the second bearer information; and
receiving, by the first network device, the second bearer information from the fourth network device;
or
receiving, by the first network device, storage location information of the second bearer information from the fourth network device, wherein the second bearer information is stored in a fifth network device; and
obtaining, by the first network device, the second bearer information from the fifth network device based on the storage location information of the second bearer information.

7. The method according to claim 6, wherein if the fourth network device and the fifth network device do not store the second bearer information, the method further comprises:
triggering, by the first network device, the second device to establish the second bearer.

8. The method according to any one of claims 1 to 7, wherein the obtaining, by the first network device, second bearer information of the second device based on the indication information of the communication bearer comprises:
determining, by the first network device based on the indication information of the communication bearer, that a communication bearer manner is local switching; or
obtaining, by the first network device from a sixth network device, that the communication bearer manner is local switching; and
obtaining, by the first network device, the second bearer information of the second device based on the communication bearer manner.

9. The method according to any one of claims 1 to 8, wherein before or after the sending, by the first network device, a response message to the first device, the method further comprises:
sending, by the first network device, a fourth message to the fourth network device, wherein the fourth message comprises status information of a first bearer, first device information, and first bearer information, and the fourth message is used to indicate the fourth network device to store the information in the fourth message.

10. The method according to claim 9, wherein the method further comprises:
sending, by the first network device, a fifth message to the second device, wherein the fifth message comprises the first bearer information, and the first bearer information comprises address information of the first device;
or
sending, by the first network device, a sixth message to the second network device, wherein the sixth message comprises the first bearer information; and
the first bearer information is used to establish the communication bearer.

11. The method according to claim 10, wherein the fifth network device is different from the first network device, and the method further comprises:
exchanging, by the first network device, pairing forwarding information of the first bearer and the second bearer with the fifth network device.

12. A method for establishing a communication bearer, wherein the method is applied to a second network device, and comprises:
receiving, by the second network device, second bearer information from a first network device, wherein the second bearer information is used to indicate the second network device to establish a communication bearer between a first device and a second device; and
establishing, by the second network device, the communication bearer between the first device and the second device based on the second bearer information.

13. The method according to claim 12, wherein the method further comprises:
receiving, by the second network device, data packet detection indication information from the first network device, wherein the data packet detection indication information is used to indicate the second network device to detect a data packet transmitted on the communication bearer between the first device and the second device, and the data packet detection indication information comprises a data packet detection rule; and
detecting, by the second network device, the data packet according to the data packet detection rule.

14. The method according to claim 13, wherein the method further comprises:
modifying, by the second network device, receiver information of the detected data packet to address information of the second device based on the second bearer information.

15. A method for establishing a communication bearer, wherein the method is applied to a first device, and comprises:
sending, by the first device, a first message to a first network device, wherein the first message comprises indication information of a communication bearer, the first message is used to request to establish the communication bearer, and the communication bearer is used to transmit communication information between the first device and a second device; and
receiving, by the first device, a response message from the first network device, wherein
the indication information of the communication bearer is used to indicate that a communication bearer manner is local switching.

16. The method according to claim 15, wherein the indication information of the communication bearer comprises explicit indication information and implicit indication information; and
the explicit indication information comprises network slice information, data network information, and/or control link information, and the implicit indication information comprises first device information and/or second device information.

17. The method according to claim 15 or 16, wherein the response message comprises second bearer information, and the second bearer information is used to establish the communication bearer between the first device and the second device; and the method further comprises:
establishing, by the first device, the communication bearer between the first device and the second device based on the second bearer information.

18. The method according to claim 17, wherein the method further comprises:
encapsulating, by the first device based on the second bearer information, a data packet transmitted on the communication bearer between the first device and the second device, wherein receiver information of the data packet comprises address information of the second device.

19. A method for establishing a communication bearer, wherein the method is applied to a fourth network device, and comprises:
receiving, by the fourth network device, a request message of a first network device, wherein the request message is used to request to obtain at least one of the following information: status information of a first bearer, status information of a second bearer, second device information, first device information, first bearer information, second bearer information, storage location information of the second bearer information, and storage location information of the first bearer information, and the information obtained by the request message is used to establish a communication bearer between a first device and a second device; and
sending, by the fourth network device, the at least one of the foregoing information to the first network device.

20. The method according to claim 19, wherein
receiving, by the fourth network device, a fourth message from the first network device, wherein the fourth message is used to indicate the fourth network device to store the information in the fourth message, and the fourth message comprises the at least one of the foregoing information; and
storing, by the fourth network device, the at least one of the foregoing information.

21. The method according to claim 19 or 20, wherein the fourth message comprises the first bearer information or the second bearer information, and after the receiving, by the fourth network device, a fourth message from the first network device, the method further comprises:
sending, by the fourth network device, the first bearer information to a second network device or the second device; or
sending, by the fourth network device, the second bearer information to a second network device or the first device.

22. A method for establishing a communication bearer, wherein the method is applied to a first system, the first system comprises a first network device, a first device, and a second device, and the method comprises:
sending, by the first device, a first message to the first network device, wherein the first message comprises indication information of a communication bearer, the first message is used to request to establish the communication bearer, and the communication bearer is used to transmit communication information between the first device and the second device;
obtaining, by the first network device, second bearer information of the second device based on the indication information of the communication bearer, wherein the second bearer information comprises address information of the second device; and
sending, by the first network device, a response message to the first device, and sending, by the first device, a data packet to the second device based on the response message.

23. The method according to claim 22, wherein the response message comprises the second bearer information.

24. The method according to claim 22, wherein the first system further comprises a second network device, and after the obtaining, by the first network device, second bearer information of the second device based on the indication information of the communication bearer, the method further comprises:
sending, by the first network device, the second bearer information to the second network device.

25. The method according to any one of claims 22 to 24, wherein the obtaining, by the first network device, second bearer information of the second device based on the indication information of the communication bearer comprises:
in response to the received indication information of the communication bearer, obtaining, by the first network device through query, status information of a second bearer based on second device information, wherein the status information of the second bearer is stored in the first network device; and
obtaining, by the first network device, the second bearer information based on the status information of the second bearer, wherein
the second device information is comprised in the first message.

26. The method according to any one of claims 22 to 24, wherein the first system further comprises a fourth network device, and the obtaining, by the first network device, second bearer information of the second device based on the indication information of the communication bearer comprises:
in response to the received indication information of the communication bearer, sending, by the first network device, a second message to the fourth network device, wherein the second message is used to obtain status information of a second bearer, and the second message comprises second device information;
receiving, by the first network device, the status information of the second bearer from the fourth network device; and
obtaining, by the first network device, the second bearer information based on the status information of the second bearer.

27. The method according to claim 25 or 26, wherein if the first network device does not obtain the second bearer information, the method further comprises:
triggering, by the first network device, the second device to establish the second bearer.

28. The method according to any one of claims 22 to 27, wherein the sending, by the first device, a data packet to the second device based on the response message comprises:
encapsulating, by the first device based on the second bearer information, a data packet transmitted on the communication bearer between the first device and the second device, wherein receiver information of the data packet comprises the address information of the second device; and
sending, by the first device, the data packet to the second device.

29. The method according to any one of claims 22 to 27, wherein the sending, by the first device, a data packet to the second device based on the response message comprises:
sending, by the first device, the data packet to the second network device;
detecting, by the second network device, the data packet according to a data packet detection rule, wherein the data packet detection rule is obtained by the second network device from the first network device;
modifying, by the second network device, receiver information of the detected data packet to the address information of the second device based on the second bearer information; and
sending, by the second network device, the modified data packet to the second device.

30. The method according to claim 28 or 29, wherein the first system further comprises a sixth network device, and the obtaining, by the first network device, second bearer information of the second device based on the indication information of the communication bearer comprises:
determining, by the first network device based on the indication information of the communication bearer, that a communication bearer manner is local switching; or
obtaining, by the first network device from the sixth network device, that the communication bearer manner is local switching; and
obtaining, by the first network device, the second bearer information of the second device based on the communication bearer manner.

31. The method according to any one of claims 22 to 30, wherein before or after the sending, by the first network device, a response message to the first device, the method further comprises:
sending, by the first network device, a fourth message to the fourth network device, wherein the fourth message comprises at least one of the following information: first device information, the second device information, status information of a first bearer, the status information of the second bearer, first bearer information, the second bearer information, storage location information of the first bearer information, and storage location information of the second bearer information; and
the fourth message is used to indicate the fourth network device to store the at least one of the foregoing information in the fourth message.

32. The method according to claim 31, wherein the method further comprises:
sending, by the first network device, a fifth message to the second device, wherein the fifth message comprises the first bearer information, and the first bearer information comprises address information of the first device; or
sending, by the first network device, a sixth message to the second network device, wherein the sixth message comprises the first bearer information; and
the first bearer information is used to establish the communication bearer.

33. A first network device, wherein the device comprises:
a memory, configured to store computer-executable instructions;
a radio frequency circuit, configured to send and receive a wireless signal; and
a processor, configured to execute the computer-executable instructions to implement the method for establishing a communication bearer according to any one of claims 1 to 11.

34. A second network device, wherein the device comprises:
a memory, configured to store computer-executable instructions;
a radio frequency circuit, configured to send and receive a wireless signal; and
a processor, configured to execute the computer-executable instructions to implement the method for establishing a communication bearer according to any one of claims 12 to 14.

35. A first device, wherein the device comprises:
a memory, configured to store computer-executable instructions;
a radio frequency circuit, configured to send and receive a wireless signal; and
a processor, configured to execute the computer-executable instructions to implement the method for establishing a communication bearer according to any one of claims 15 to 18.

36. A fourth network device, wherein the device comprises:
a memory, configured to store computer-executable instructions;
a radio frequency circuit, configured to send and receive a wireless signal; and
a processor, configured to execute the computer-executable instructions to implement the method for establishing a communication bearer according to any one of claims 19 to 21.

37. A first system, wherein the first system comprises:
a first network device, configured to implement the method for establishing a communication bearer according to any one of claims 1 to 11;
a second network device, configured to implement the method for establishing a communication bearer according to any one of claims 12 to 14;
a first device, configured to implement the method for establishing a communication bearer with a second device according to any one of claims 15 to 18; and
a fourth network device, configured to implement the method for establishing a communication bearer according to any one of claims 19 to 21.

38. A computer-readable storage medium, wherein the computer-readable storage medium stores computer-executable instructions, and when the computer-executable instructions are executed by a processor, the method for establishing a communication bearer according to any one of claims 1 to 21 is implemented.

39. A chip system, wherein the chip system comprises a processor and a memory, the memory stores instructions, and when the instructions are executed by the processor, the method for establishing a communication bearer according to any one of claims 1 to 21 is implemented.
